# EUROPÄISCHE PATENTSCHRIFT

(11) **EP 3 160 814 B1**
(45) Veröffentlichungstag und Bekanntmachung des Hinweises auf die Patenterteilung: **14.08.2024**
(21) Anmeldenummer: 15722169.8
(22) Anmeldetag: 08.05.2015
(51) Int. Cl.: B60W 50/029, G05D 1/00

(54) **VORRICHTUNG UND VERFAHREN ZUM BETREIBEN EINES FAHRZEUGS**
DEVICE AND METHOD FOR OPERATING A VEHICLE
DISPOSITIF ET PROCÉDÉ POUR FAIRE FONCTIONNER UN VÉHICULE

(30) Priorität: 27.06.2014 DE 102014212384
(43) Veröffentlichungstag der Anmeldung: 03.05.2017
(73) Patentinhaber: Robert Bosch GmbH, 70442 Stuttgart (DE)
(72) Erfinder: MUEHLMANN, Karsten, 70499 Stuttgart (DE); HELMLE, Michael, 73732 Esslingen (DE); PINK, Oliver, 70469 Stuttgart (DE); BAUMGAERTNER, Rainer, 74397 Pfaffenhofen (DE); SCHWARZKOPF, Jeannine, 71638 Ludwigsburg (DE); HAULER, Florian, 76351 Linkenheim (DE); RUEHLE, Armin, 71384 Weinstadt (DE); SCHROEDER, Christoph, 74385 Pleidelsheim (DE)
(86) Internationale Anmeldenummer: PCT/EP2015/060194
(87) Internationale Veröffentlichungsnummer: WO 2015/197251

(56) Entgegenhaltungen:
- EP-A1- 2 314 490
- EP-A1- 3 148 857
- EP-A2- 2 390 862
- EP-A2- 2 942 687
- WO-A1-2013/150244
- WO-A2-2014/044480
- DE-A1- 102012 016 867
- DE-A1- 102012 211 901
- DE-A1- 102013 020 177

## Beschreibung

Die Erfindung betrifft eine Vorrichtung und ein Verfahren zum Betreiben eines Fahrzeugs. Die Erfindung betrifft ferner ein Computerprogramm.

### Stand der Technik

Fahrerassistenzsysteme für hochautomatisiertes Fahren sind aktuell in der Entstehungsphase. Die Vorkehrungen bezüglich funktionaler Sicherheitskonzepte sind oft nur sehr rudimentär vorhanden und werden zum Großteil noch über einen menschlichen Eingriff abgesichert. Für eine Markteinführung sind funktionale Sicherheitskonzepte notwendig, die ganz oder teilweise failoperational sind (kritische Fehler werden erkannt, die minimal notwendige Funktion wird auch im Fehlerfall sicher weiter ausgeführt). Heutige Systeme im Automotive-Umfeld sind überwiegend failsafe realisiert (kritische Fehler werden erkannt, die Funktion wird in einen sicheren Zustand überführt).

Systeme für hochautomatisiertes Fahren sind technisch aufwändig. Sie benötigen eine hohe Rechenleistung und einen großen Speicher. Das komplette Umsetzen derartig großer Systeme als failoperational ist heute nur sehr schwer möglich.

Die Offenlegungsschrift EP 2 390 862 A2 offenbart ein Verfahren zur Steuerung eines Betriebs eines vollautomatischen, zur unabhängigen Fahrzeugführung ausgebildeten Fahrerassistenzsystems eines Kraftfahrzeugs.

Die Offenlegungsschrift WO 2014/044480 A2 offenbart ein Verfahren und eine Vorrichtung zum Betreiben eines Kraftfahrzeugs in einem automatisierten Fahrbetrieb.

Die Offenlegungsschrift DE 10 2013 020 177 A1 offenbart ein Kraftfahrzeug mit einem ersten Sensorsystem und einem zweiten Sensorsystem und einer Hauptsteuerungseinheit und einer Ersatzsteuerungseinheit.

Die nachveröffentlichte Offenlegungsschrift EP 2 942 687 A2 offenbart ein automatisiertes Fahrsystem.

Die nachveröffentlichte Offenlegungsschrift EP 3 148 857 A1 offenbart ein Fahrzeugsteuersystem für eine autonome Führung eines Fahrzeugs.

Die Offenlegungsschrift DE 10 2012 016 867 A1 offenbart ein Parkassistenzsystem.

Die nachveröffentlichte Offenlegungsschrift EP 3 140 167 A1 offenbart eine Vorrichtung zum Betreiben eines Fahrzeugs.

### Offenbarung der Erfindung

Die der Erfindung zugrunde liegende Aufgabe kann daher darin gesehen werden, eine verbesserte Vorrichtung zum Betreiben eines Fahrzeugs bereitzustellen, die auch im Fehlerfall weiter eine automatisierte Fahrfunktion ausführen kann, also zumindest teilweise failoperational ist.

Die der Erfindung zugrunde liegende Aufgabe kann des Weiteren darin gesehen werden, ein entsprechendes Verfahren zum Betreiben eines Fahrzeugs anzugeben.

Die der Erfindung zugrunde liegende Aufgabe kann auch darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung nach Anspruch 1, wird eine Vorrichtung zum Betreiben eines Fahrzeugs bereitgestellt, umfassend:
- eine Steuerungseinrichtung, die ausgebildet ist, das Fahrzeug automatisiert zu führen, und
- eine Überwachungseinrichtung, die ausgebildet ist, die Steuerungseinrichtung während der automatisierten Führung des Fahrzeugs mittels der Steuerungseinrichtung auf einen Fehler zu überwachen und bei einem erkannten Fehler die automatisierte Führung des Fahrzeugs von der Steuerungseinrichtung zu übernehmen, wobei
die Überwachungseinrichtung als Funktionsumfang eine Teilmenge eines Funktionsumfangs umfassend mehrere Funktionen der Steuerungseinrichtung aufweist, wobei die Überwachungseinrichtung ausgebildet ist, zum Überwachen der Steuerungseinrichtung ausschließlich die der Teilmenge entsprechenden Funktionen des Funktionsumfangs der Steuerungseinrichtung auf einen Fehler zu überwachen.

Nach einem anderen der Erfindung nach Anspruch 8, wird ein Verfahren zum Betreiben eines Fahrzeugs bereitgestellt, umfassend die folgenden Schritte:
- automatisiertes Führen des Fahrzeugs mittels einer Steuerungseinrichtung,
- Überwachen der Steuerungseinrichtung auf einen Fehler mittels einer Überwachungseinrichtung während die Steuerungseinrichtung das Fahrzeug automatisiert führt,
- Übernehmen der automatisierten Führung von der Steuerungseinrichtung mittels der Überwachungseinrichtung, wenn die Überwachungseinrichtung einen Fehler erkennt.

Nach noch einem Aspekt der Erfindung nach Anspruch 9, wird ein Computerprogramm bereitgestellt, welches Programmcode zur Durchführung des Verfahrens zum Betreiben eines Fahrzeugs umfasst, wenn das Computerprogramm auf einem Computer ausgeführt wird.

Die Erfindung umfasst insbesondere den Gedanken, eine Überwachungseinrichtung vorzusehen, welche die Steuerungseinrichtung überwacht, während die Steuerungseinrichtung das Fahrzeug automatisiert führt. Bei einem Fehler der Steuerungseinrichtung übernimmt die Überwachungseinrichtung die Führung des Fahrzeugs von der Steuerungseinrichtung. Die Überwachungseinrichtung steuert dann das Fahrzeug selbst. Dadurch wird insbesondere der technische Vorteil bewirkt, dass selbst in einem Fehlerfall das Fahrzeug weiterhin automatisiert geführt werden kann. Ein unmittelbarer Eingriff eines Fahrers des Fahrzeugs ist somit nicht mehr unbedingt erforderlich. Dies kann in vorteilhafter Weise ein Unfallrisiko verringern, insofern dem Fahrer nun mehr Zeit gegeben wird, sich auf den Fehlerfall einzustellen und zu reagieren. Durch die Überwachungseinrichtung ist somit in vorteilhafter Weise eine Sicherung geschaffen, die einen Fehlbetrieb der Steuerungseinrichtung kompensieren kann. Insgesamt wird in vorteilhafter Weise eine Fahrzeugsicherheit erhöht.

Ausführungsformen hinsichtlich des Verfahrens ergeben sich analog aus Ausführungsformen hinsichtlich der Vorrichtung und umgekehrt. Ausführungen, Vorteile und technische Wirkungen hinsichtlich der Vorrichtung ergeben sich analog aus Ausführungsformen hinsichtlich des Verfahrens und umgekehrt.

Eine automatisierte Führung im Sinne der vorliegenden Erfindung bezeichnet insbesondere eine Führung, in welcher ein Fahrer des Fahrzeugs keinen Eingriff vornehmen muss. Das heißt, dass das Fahrzeug während der automatisierten Führung autonom und selbstständig mittels der Steuerungseinrichtung oder mittels der Überwachungseinrichtung geführt wird.

Erfindungsgemäss ist vorgesehen, dass die Überwachungseinrichtung als Funktionsumfang eine Teilmenge eines Funktionsumfangs umfassend mehrere Funktionen der Steuerungseinrichtung aufweist, wobei die Überwachungseinrichtung ausgebildet ist, zum Überwachen der Steuerungseinrichtung ausschließlich die der Teilmenge entsprechenden Funktionen des Funktionsumfangs der Steuerungseinrichtung auf einen Fehler zu überwachen.

Dadurch wird insbesondere der technische Effekt bewirkt, dass die Überwachungseinrichtung eine geringere Rechenleistung und einen geringeren Speicher benötigt als die Steuerungseinrichtung. Denn die Überwachungseinrichtung beschränkt sich hinsichtlich der Überwachung auf eine Teilmenge des Funktionsumfangs der Steuerungseinrichtung. Insbesondere beschränkt sie sich auf eine sichere Teilmenge des Funktionsumfangs der Steuerungseinrichtung, die mittels einer Überdeckung an verbauten Systemkomponenten (zum Beispiel Sensoren, Aktoren oder Steuergeräte) notwendige Sicherheitsanforderungen erfüllt. Zwar kann die Steuerungseinrichtung im Fehler nicht sämtliche Komfortanforderungen erfüllen. Jedoch werden in vorteilhafter Weise Sicherheitsanforderungen erfüllt. Funktionen, die einen Komfort schaffen, aber nicht von der Überwachungseinrichtung gemäß dieser Ausführungsform bereitgestellt werden können sind zum Beispiel: Übergang zu einer unkomfortablen Fahrweise, Defensiv Fahrweise mit erhöhten Abständen zu anderen Verkehrsteilnehmern, Verringerung der Maximalgeschwindigkeit, Unterbinden von Überholmanövern, Übergang zur Folgefahrt hinter vorrausfahrendem Verkehr. Um eine echte Überwachung nach einer Ausführungsform vorzusehen und eine sichere Übernahme zu gewährleisten, ist insbesondere vorgesehen, dass sichergestellt wird, dass die Überwachungseinrichtung und die Steuerungseinrichtung (Hauptfunktion) hinreichend commoncause-frei bezüglich der kritischen Fehlerbilder sind. Das schließt insbesondere auch die Sensoren und Aktuatoren mit ein.

In einer anderen Ausführungsform ist vorgesehen, dass die Überwachungseinrichtung ausgebildet ist, bei einem erkannten Fehler das Fahrzeug sicher abzustellen.

Dadurch wird beispielsweise der technische Vorteil bewirkt, dass das Fahrzeug schnell in einen sicheren Zustand überführt werden kann. Zum Beispiel ist vorgesehen, dass ein Parkplatz angesteuert wird und dass das Fahrzeug dort abgestellt wird. Das kann in vorteilhafter Weise eine Sicherheit erhöhen, insofern das Fahrzeug nach dem Abstellen einen Abstand zum fließenden Verkehr aufweist.

Gemäß einer anderen Ausführungsform ist vorgesehen, dass die Überwachungseinrichtung ausgebildet ist, basierend auf einer momentanen Solltrajektorie und einer zukünftigen Solltrajektorie, die beide mittels der Steuerungseinrichtung ermittelt wurden, eine momentane und eine zukünftige Führungsabsicht der Steuerungseinrichtung zu erkennen und basierend auf den erkannten Führungsabsichten zu entscheiden, ob ein Fehler vorliegt oder nicht.

In einer anderen Ausführungsform ist vorgesehen, dass die Überwachungseinrichtung basierend auf einer momentanen Solltrajektorie und einer zukünftigen Solltrajektorie, die beide mittels der Steuerungseinrichtung ermittelt wurden, eine momentane und eine zukünftige Führungsabsicht der Steuerungseinrichtung erkennt und basierend auf den erkannten Führungsabsichten entscheidet, ob ein Fehler vorliegt oder nicht. Die momentane Solltrajektorie und die zukünftige Solltrajektorie sind beispielsweise wie folgt definiert: Die momentane Solltrajektorie wird verstanden als die momentane Absicht (zum Beispiel die direkte Steuerabsicht) und die zukünftige Solltrajektorie wird als die echte Solltrajektorie verstanden, welche zum Beispiel über einen vorbestimmten Zeitraum, zum Beispiel y = 10 Sekunden, vorausschaut (Darin ist typisch mit einer zeitlichen Auflösung von zum Beispiel x (zum Beispiel x = 10) Millisekunden die zukünftige Steuerabsicht hinterlegt.). Feiner heißt das, dass ohne die zukünftige Solltrajektorie der Fehler sehr viel später in Erscheinung tritt. Mit der zukünftigen Solltrajektorie kann bis zu y Sekunden vorher reagiert werden.

Gemäß einer anderen Ausführungsform ist vorgesehen, dass die Überwachungseinrichtung ausgebildet ist, eine Sicherheitssolltrajektorie zu ermitteln und im Fehlerfall das Fahrzeug basierend auf der Sicherheitssolltrajektorie zu führen.

Die Sicherheitssolltrajektorie wird insbesondere noch während der automatisierten Führung des Fahrzeugs mittels der Steuerungseinrichtung ermittelt. Insbesondere wird die Sicherheitssolltrajektorie im Fehlerfall ermittelt. Die Sicherheitssolltrajektorie wird insbesondere zum Erreichen eines sicheren Zustands verwendet. Insbesondere wird das Fahrzeug basierend auf der Sicherheitssolltrajektorie sicher abgestellt. Durch das Vorsehen einer Sicherheitssolltrajektorie wird insbesondere der technische Vorteil bewirkt, dass das Fahrzeug schnell und sicher in einen sicheren Zustand geführt werden kann. Die beiden Trajektorien (,also die Sicherheitstrajektorie, die mittels der Steuerungseinrichtung ermittelt wurde, und die Sicherheitstrajektorie, die mittels der Überwachungseinrichtung ermittelt wurde,) können zum Beispiel gegeneinander plausibilisiert werden, indem beispielsweise auf Kollision überprüft wird (das heißt, dass eine oder beide Trajektorien beispielsweise auf Kollision geprüft werden). Da die Trajektorien zu jedem Zeitpunkt (Sie werden alle x ms, zum Beispiel alle 10 ms, berechnet) korrekt sein müssen, besteht die Möglichkeit, im Fehlerfall auf die Sicherheitstrajektorie aus dem vorherigen x ms Zyklus zurückzufallen. Damit ist insbesondere auch vorgesehen, dass die Hauptfunktion (die Steuerungseinrichtung) sowohl die Solltrajektorie als auch die Sicherheitssolltrajektorie berechnet und die Überwachungseinrichtung beide überwacht.

Nach einer weiteren Ausführungsform ist vorgesehen, dass die Überwachungseinrichtung ausgebildet ist, die Sicherheitssolltrajektorie basierend auf der letzten als gültig erkannten Solltrajektorie, die mittels der Steuerungseinrichtung ermittelt wurde, zu ermitteln.

In einer anderen Ausführungsform ist vorgesehen, dass die Überwachungseinrichtung die Sicherheitssolltrajektorie basierend auf der letzten als gültig erkannten Solltrajektorie, die mittels der Steuerungseinrichtung ermittelt wurde, ermittelt. Die Sicherheitstrajektorie muss nicht zwingend basierend auf der Solltrajektorie berechnet werden. Die Sicherheitstrajektorie kann zum Beispiel einfach als hindernisfrei bis zum Stillstand berechnet werden. Wenn man die letzte Solltrajektorie als Basis heranzieht dann kann dadurch eine bessere Performance bezüglich des geplanten Weges erreicht werden. Der Aufwand verringert sich deshalb, weil sonst der komplette Prozess der Solltrajektorienbildung noch mal ausgeführt werden muss. Es kann allerdings sinnvoll und beispielsweise vorgesehen sein, den erhöhten Aufwand bewusst in Kauf zu nehmen, um die beste Sicherheitstrajektorie unter verschärften Anforderungen zu berechnen, zum Beispiel wird die Sicherheitstrajektorie so gewählt, dass das Gefährdungspotential minimiert wird, oder so gewählt, dass der hindernisfreiste Zustand erreicht und eingehalten wird, oder so gewählt, dass bei Ausfall zum Beispiel mit reduzierter Rückfallfunktionalität noch sicher bis zum Stillstand gefahren werden kann.

Dadurch wird in vorteilhafter Weise ein Rechenaufwand für das Ermitteln der Sicherheitssolltrajektorie reduziert. Denn es wird in vorteilhafter Weise die letzte als gültig erkannte Solltrajektorie der Steuerungseinrichtung als Sicherheitssolltrajektorie verwendet.

Nach einer anderen Ausführungsform ist vorgesehen, dass die letzte als gültig erkannte Solltrajektorie eine laterale und eine longitudinale Trajektorie umfasst, wobei die Überwachungseinrichtung ausgebildet ist, zum Ermitteln der Sicherheitssolltrajektorie die laterale Trajektorie zu behalten und die longitudinale Trajektorie mit einer neu ermittelten longitudinalen Trajektorie zu überschreiben oder zum Ermitteln der Sicherheitssolltrajektorie die longitudinale Trajektorie zu behalten und die laterale Trajektorie mit einer neu ermittelten lateralen Trajektorie zu überschreiben.

Das heißt, dass die Sicherheitssolltrajektorie entweder die laterale Trajektorie und die neu ermittelte longitudinale Trajektorie umfasst oder die longitudinale Trajektorie und die neu ermittelte laterale Trajektorie umfasst. Dadurch, dass entweder die laterale oder die longitudinale Trajektorie behalten wird, kann in vorteilhafter Weise ein Rechenaufwand beim Ermitteln der Sicherheitssolltrajektorie reduziert werden. Denn zum Ermitteln der Sicherheitssolltrajektorie reicht es aus, nur eine der beiden Trajektorien neu zu ermitteln.

Nach einer anderen Ausführungsform ist vorgesehen, dass die Überwachungseinrichtung ausgebildet ist, für eine Kollisions- und/oder Gefährdungserkennung eine Freifläche im Umfeld des Fahrzeugs zu ermitteln.

Dadurch wird beispielsweise der technische Vorteil bewirkt, dass Kenntnis darüber besteht, welche Flächen im Umfeld des Fahrzeugs befahren werden können und welche nicht. Dadurch kann in vorteilhafter Weise eine drohende Kollision erkannt werden. Entsprechende Gegenmaßnahmen können dann in vorteilhafter Weise ergriffen werden.

Die Erfindung wird im Folgenden anhand von bevorzugten Ausführungsbeispielen näher erläutert. Hierbei zeigen
Fig. 1 eine Vorrichtung zum Betreiben eines Fahrzeugs und
Fig. 2 ein Ablaufdiagramm eines Verfahrens zum Betreiben eines Fahrzeugs.

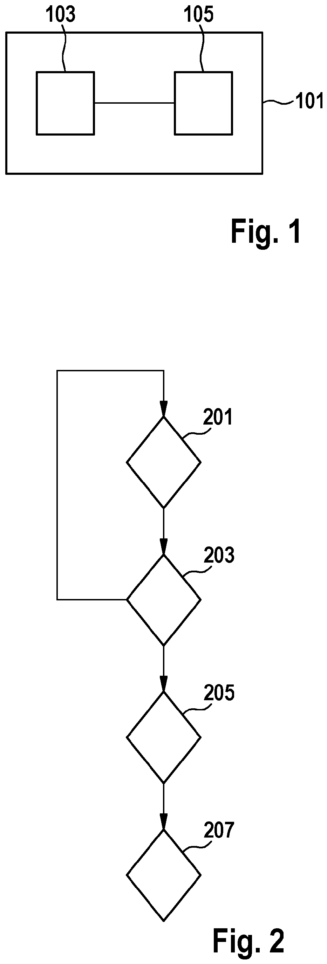

Fig. 1 zeigt eine Vorrichtung 101 zum Betreiben eines Fahrzeugs (nicht gezeigt).

Die Vorrichtung 101 umfasst eine Steuerungseinrichtung 103, die ausgebildet ist, das Fahrzeug automatisiert zu führen. Die Vorrichtung 101 umfasst ferner eine Überwachungseinrichtung 105, die ausgebildet ist, die Steuerungseinrichtung 103 während der automatisierten Führung des Fahrzeugs mittels der Steuerungseinrichtung 103 auf einen Fehler zu überwachen und bei einem erkannten Fehler die automatisierte Führung des Fahrzeugs von der Steuerungseinrichtung 103 zu übernehmen.

Zum Führen des Fahrzeugs stehen die beiden Einrichtungen 103 und 105 vorzugsweise jeweils in Wirkverbindung mit Aktoren und/oder Steuergeräten solcher Aktoren, um diese zu steuern, zum Beispiel Aktoren eines Bremssystems, Aktoren eines Lenkungssystems und/oder Aktoren eines Antriebssystems des Fahrzeugs.

Zum Führen des Fahrzeugs wird insbesondere eine Vielzahl von Daten verwendet. Solche Daten können beispielsweise Sensordaten von Umfeldsensoren sein. Insbesondere können solche Daten Fahrzeugdaten von weiteren Fahrzeugen sein. Das heißt beispielsweise, dass ein Umfeld des Fahrzeugs beispielsweise sensorisch erfasst wird, wobei basierend auf dem sensorisch erfassten Umfeld die automatisierte Führung des Fahrzeugs durchgeführt wird. Das heißt beispielsweise, dass Fahrzeugdaten von weiteren Fahrzeugen empfangen werden kann, wobei basierend auf den Fahrzeugdaten die automatisierte Führung des Fahrzeugs durchgeführt wird. Hierfür umfasst die Vorrichtung beispielsweise eine Kommunikationsschnittstelle zum Empfangen von Fahrzeugdaten von weiteren Fahrzeugen. Die beiden Einrichtungen 103, 105 sind insbesondere ausgebildet, basierend auf den Sensordaten und/oder Fahrzeugdaten das Fahrzeug automatisiert zu führen oder zu steuern.

Fig. 2 zeigt ein Ablaufdiagramm eines Verfahrens zum Betreiben eines Fahrzeugs.

In einem Schritt 201 wird das Fahrzeug mittels einer Steuerungseinrichtung automatisiert geführt. In einem Schritt 203 überwacht eine Überwachungseinrichtung die Steuerungseinrichtung auf einen Fehler, während die Steuerungseinrichtung das Fahrzeug automatisiert führt gemäß dem Schritt 201. Wenn die Überwachungseinrichtung keinen Fehler erkennt, so übernimmt sie nicht die Führung des Fahrzeugs von der Steuerungseinrichtung. Vielmehr steuert die Steuerungseinrichtung das Fahrzeug weiterhin automatisiert. Das Verfahren startet wieder beim Schritt 201. Sofern aber die Überwachungseinrichtung einen Fehler in der Steuerungseinrichtung erkennt, so übernimmt in einem Schritt 205 die Überwachungseinrichtung die Führung des Fahrzeugs von der Steuerungseinrichtung. In einem Schritt 207 steuert dann die Überwachungseinrichtung das Fahrzeug.

Das Führen oder das Steuern des Fahrzeugs mittels der Überwachungseinrichtung kann beispielsweise den Schritt umfassen, dass die Überwachungseinrichtung das Fahrzeug sicher abstellt. Insbesondere kann die Überwachungseinrichtung die Führung des Fahrzeugs dann wieder an die Steuerungseinrichtung abgeben, wenn die Steuerungseinrichtung wieder ordnungsgemäß funktioniert. Dies kann die Überwachungseinrichtung erkennen. Im einfachsten Fall überwacht die Überwachungseinrichtung auch nach der Übernahme weiter die Trajektorien der Steuerungseinrichtung und könnte dann, falls für einen Mindestzeitraum wieder korrekte Werte kommen, wieder an die Steuerungseinrichtung zurückgeben. Vorteilhaft ist dies zum Beispiel, wenn der sichere Zustand nicht der Stillstand, sondern zum Beispiel die Folgefahrt hinter dem vorausfahrenden Verkehr ist. Zusätzlich oder alternativ ist nach einer Ausführungsform vorgesehen, dass die Überwachungseinrichtung der Steuerungseinricntung zurückmeldet, dass sie einen Fehler erkannt hat. Nach Beseitigung des Fehlers kann vorzugsweise dann ebenfalls wieder an die Steuerungseinrichtung übergeben werden.

Insbesondere steuert die Überwachungseinrichtung das Fahrzeug solange, bis ein Fahrer des Fahrzeugs die Steuerung wieder übernimmt. Hierfür kann beispielsweise ein Übernahmewunsch des Fahrers erfasst werden, sodass dann entsprechend die Steuerung von der Überwachungseinrichtung an den Fahrer übergeben werden kann.

Die Erfindung umfasst also insbesondere den Gedanken, zwei Instanzen (hier die zwei Einrichtungen) vorzusehen:
1. Die eigentliche Funktion hochautomatisiertes Fahren mit reduzierten Anforderungen an eine funktionale Sicherheit: hier durch die Steuerungseinrichtung realisiert.
2. Die Überwachungseinrichtung (die auch als Überwacher bezeichnet werden kann), die in der Regel nur eine reduzierte Funktionalität bezüglich eines hochautomatisierten Fahrens umfasst, jedoch mit einer erforderlichen funktionalen Sicherheit.

Zur Reduzierung der Anforderungen bezüglich funktionaler Sicherheit ist nach einer Ausführungsform vorgesehen, dass eine Entscheidungsinstanz (Entscheider) vorgesehen ist, die mit der kombinierten Sicherheit entscheidet, wer von den beiden Teilen (Steuerungseinrichtung und Überwacher) Recht hat. Der Entscheider selbst ist in der Regel einfach und kann zum Beispiel als separierter Teil in der Steuerungseinrichtung (Hauptfunktion) realisiert werden.
1. Er kann genauso als separierter Teil im Überwacher realisiert werden.
2. Eigenständig realisiert werden.
3. Als Teil der Aktuatorik realisiert werden.

Grundsätzlich können die folgenden drei Strategien bezüglich einer Reaktion der Überwachungseinrichtung in weiteren Ausführungsformen vorgesehen sein:
1. Die Überwachungseinrichtung übersteuert das System (Fahrzeug) bei kleinen Abweichungen kurzfristig.
2. Die Überwachungseinrichtung übersteuert das System bei größeren und gefährdenden Abweichungen langfristig (zum Beispiel bringt das System (Fahrzeug) in einen sicheren Zustand oder übernimmt solange, bis der Fahrer übernimmt, oder übernimmt solange, bis die Steuerungseinrichtung wieder nachweislich fehlerfrei arbeitet).
3. Die Überwachungseinrichtung übersteuert das System bei kleinen und größeren und gefährdenden Abweichungen langfristig (zum Beispiel bringt das System (Fahrzeug) in einen sicheren Zustand oder übernimmt solange, bis der Fahrer übernimmt, oder übernimmt solange, bis die Steuerungseinrichtung wieder nachweislich fehlerfrei arbeitet).

Die Überwachungseinrichtung muss zumindest einen Teil der Funktion der Steuerungseinrichtung überwachen. Dazu muss sie auch einen Teil der Funktion beinhalten.

## Patentansprüche

1. Vorrichtung (101) zum Betreiben eines Fahrzeugs, umfassend:
- eine Steuerungseinrichtung (103), die ausgebildet ist, das Fahrzeug automatisiert zu führen, wobei
- eine Überwachungseinrichtung (105), die ausgebildet ist, die Steuerungseinrichtung (103) während der automatisierten Führung des Fahrzeugs mittels der Steuerungseinrichtung (103) auf einen Fehler zu überwachen und bei einem erkannten Fehler die automatisierte Führung des Fahrzeugs von der Steuerungseinrichtung (103) zu übernehmen,
**gekennzeichnet dadurch, dass** die Überwachungseinrichtung (105) als Funktionsumfang eine Teilmenge eines Funktionsumfangs umfassend mehrere Funktionen der Steuerungseinrichtung (103) aufweist, wobei die Überwachungseinrichtung (105) ausgebildet ist, zum Überwachen der Steuerungseinrichtung (103) ausschließlich die der Teilmenge entsprechenden Funktionen des Funktionsumfangs der Steuerungseinrichtung (103) auf einen Fehler zu überwachen.

2. Vorrichtung (101) nach einem der vorherigen Ansprüche, wobei die Überwachungseinrichtung (105) ausgebildet ist, bei einem erkannten Fehler das Fahrzeug sicher abzustellen.

3. Vorrichtung (101) nach einem der vorherigen Ansprüche, wobei die Überwachungseinrichtung (105) ausgebildet ist, basierend auf einer momentanen Solltrajektorie und einer zukünftigen Solltrajektorie, die beide mittels der Steuerungseinrichtung (103) ermittelt wurden, eine momentane und eine zukünftige Führungsabsicht der Steuerungseinrichtung (103) zu erkennen und basierend auf den erkannten Führungsabsichten zu entscheiden, ob ein Fehler vorliegt oder nicht.

4. Vorrichtung (101) nach einem der vorherigen Ansprüche, wobei die Überwachungseinrichtung (105) ausgebildet ist, eine Sicherheitssolltrajektorie zu ermitteln und im Fehlerfall das Fahrzeug basierend auf der Sicherheitssolltrajektorie zu führen.

5. Vorrichtung (101) nach Anspruch 4, wobei die Überwachungseinrichtung (105) ausgebildet ist, die Sicherheitssolltrajektorie basierend auf der letzten als gültig erkannten Solltrajektorie, die mittels der Steuerungseinrichtung (103) ermittelt wurde, zu ermitteln.

6. Vorrichtung (101) nach Anspruch 5, wobei die letzte als gültig erkannte Solltrajektorie eine laterale und eine longitudinale Trajektorie umfasst, wobei die Überwachungseinrichtung (105) ausgebildet ist, zum Ermitteln der Sicherheitssolltrajektorie die laterale Trajektorie zu behalten und die longitudinale Trajektorie mit einer neu ermittelten longitudinalen Trajektorie zu überschreiben oder zum Ermitteln der Sicherheitssolltrajektorie die longitudinale Trajektorie zu behalten und die laterale Trajektorie mit einer neu ermittelten lateralen Trajektorie zu überschreiben.

7. Vorrichtung (101) nach einem der vorherigen Ansprüche, wobei die Überwachungseinrichtung (105) ausgebildet ist, für eine Kollisions- und/oder Gefährdungserkennung eine Freifläche im Umfeld des Fahrzeugs zu ermitteln.

8. Verfahren zum Betreiben einer Vorrichtung nach einem der vorherigen Ansprüche, umfassend die folgenden Schritte:
- automatisiertes Führen (201) des Fahrzeugs mittels einer Steuerungseinrichtung (103), **gekennzeichnet durch**
- Überwachen (203) der Steuerungseinrichtung (103) auf einen Fehler mittels einer Überwachungseinrichtung (105) während die Steuerungseinrichtung (103) das Fahrzeug automatisiert führt,
- Übernehmen (205) der automatisierten Führung von der Steuerungseinrichtung (103) mittels der Überwachungseinrichtung (105), wenn die Überwachungseinrichtung (105) einen Fehler erkennt.

9. Computerprogramm, umfassend Programmcode zur Durchführung des Verfahrens nach dem Anspruch 8, wenn das Computerprogramm auf einem Computer ausgeführt wird.

## Claims

1. Apparatus (101) for operating a vehicle, comprising:
- a control device (103) designed to guide the vehicle in an automated manner, and
- a monitoring device (105) designed to monitor the control device (103) for a fault during the automated guidance of the vehicle by means of the control device (103) and to take over the automated guidance of the vehicle from the control device (103) if a fault is detected,
**characterized in that** the monitoring device (105) has, as a range of functions, a subset of a range of functions comprising a plurality of functions of the control device (103), wherein the monitoring device (105) is designed, for the purpose of monitoring the control device (103), to monitor only those functions in the range of functions of the control device (103) which correspond to the subset for a fault.

2. Apparatus (101) according to one of the preceding claims, wherein the monitoring device (105) is designed to safely switch off the vehicle if a fault is detected.

3. Apparatus (101) according to one of the preceding claims, wherein the monitoring device (105) is designed to identify an instantaneous and a future guidance intention of the control device (103) on the basis of an instantaneous target trajectory and a future target trajectory, which were both determined by means of the control device (103), and to decide whether or not there is a fault on the basis of the identified guidance intentions.

4. Apparatus (101) according to one of the preceding claims, wherein the monitoring device (105) is designed to determine a target safety trajectory and to guide the vehicle on the basis of the target safety trajectory in the event of a fault.

5. Apparatus (101) according to Claim 4, wherein the monitoring device (105) is designed to determine the target safety trajectory on the basis of the last target trajectory which was identified as valid and was determined by means of the control device (103).

6. Apparatus (101) according to Claim 5, wherein the last target trajectory identified as valid comprises a lateral and a longitudinal trajectory, wherein the monitoring device (105) is designed to retain the lateral trajectory and to overwrite the longitudinal trajectory with a newly determined longitudinal trajectory in order to determine the target safety trajectory or to retain the longitudinal trajectory and to overwrite the lateral trajectory with a newly determined lateral trajectory in order to determine the target safety trajectory.

7. Apparatus (101) according to one of the preceding claims, wherein the monitoring device (105) is designed to determine an open area in the environment of the vehicle in order to detect a collision and/or a danger.

8. Method for operating an apparatus according to one of the preceding claims, comprising the following steps of:
- guiding (201) the vehicle in an automated manner by means of a control device (103), **characterized by**
- monitoring (203) the control device (103) for a fault by means of a monitoring device (105) while the control device (103) is guiding the vehicle in an automated manner,
- taking over (205) the automated guidance from the control device (103) by means of the monitoring device (105) if the monitoring device (105) detects a fault.

9. Computer program, comprising program code for carrying out the method according to Claim 8 when the computer program is executed on a computer.

## Revendications

1. Arrangement (101) pour faire fonctionner un véhicule, comprenant :
- un dispositif de commande (103), qui est configuré pour conduire le véhicule de manière automatisée,
- un dispositif de surveillance (105), qui est configuré pour surveiller le dispositif de commande (103) pendant la conduite automatisée du véhicule au moyen du dispositif de commande (103) afin de détecter une erreur et, en présence d'une erreur reconnue, pour prendre en charge la conduite automatisée du véhicule par le du dispositif de commande (103),
**caractérisé en ce que** le dispositif de surveillance (105) possède, comme éventail de fonctions, un sous-ensemble d'un éventail de fonctions comprenant plusieurs fonctions du dispositif de commande (103), le dispositif de surveillance (105) étant configuré pour, en vue de surveiller le dispositif de commande (103), surveiller exclusivement les fonctions de l'éventail de fonctions du dispositif de commande (103) qui correspondent au sous-ensemble en vue de détecter une erreur.

2. Arrangement (101) selon l'une des revendications précédentes, le dispositif de surveillance (105) étant configuré pour arrêter le véhicule en toute sécurité en présence d'une erreur reconnue.

3. Arrangement (101) selon l'une des revendications précédentes, le dispositif de surveillance (105) étant configuré pour, sur la base d'une trajectoire de consigne momentanée et d'une trajectoire de consigne future, qui ont toutes deux été déterminées au moyen du dispositif de commande (103), reconnaître une intention de conduite momentanée et une future du dispositif de commande (103) et pour décider, sur la base des intentions de conduite reconnues, s'il y a ou non présence d'une erreur.

4. Arrangement (101) selon l'une des revendications précédentes, le dispositif de surveillance (105) étant configuré pour déterminer une trajectoire de consigne de sécurité et, en cas d'erreur, pour conduire le véhicule sur la base de la trajectoire de consigne de sécurité.

5. Arrangement (101) selon la revendication 4, le dispositif de surveillance (105) étant configuré pour déterminer la trajectoire de consigne de sécurité sur la base de la dernière trajectoire de consigne reconnue comme valable, laquelle a été déterminée au moyen du dispositif de commande (103).

6. Arrangement (101) selon la revendication 5, la dernière trajectoire de consigne reconnue comme valable comprenant une trajectoire latérale et une longitudinale, le dispositif de surveillance (105) étant configuré pour, en vue de déterminer la trajectoire de consigne de sécurité, conserver la trajectoire latérale et remplacer la trajectoire longitudinale par une trajectoire longitudinale nouvellement déterminée ou pour, en vue de déterminer la trajectoire de consigne de sécurité, conserver la trajectoire longitudinale et remplacer la trajectoire latérale par une trajectoire latérale nouvellement déterminée.

7. Arrangement (101) selon l'une des revendications précédentes, le dispositif de surveillance (105) étant configuré pour déterminer une surface libre dans l'environnement du véhicule pour une reconnaissance de collision et/ou de danger.

8. Procédé pour faire fonctionner un arrangement selon l'une des revendications précédentes, comprenant les étapes suivantes :
- conduite automatisée (201) du véhicule au moyen d'un dispositif de commande (103), **caractérisé par**
- surveillance (203) du dispositif de commande (103) en vue de détecter une erreur au moyen d'un dispositif de surveillance (105) pendant que le dispositif de commande (103) conduit le véhicule de manière automatisée,
- prise en charge (205) de la conduite automatisée par le dispositif de commande (103) au moyen du dispositif de surveillance (105) lorsque le dispositif de surveillance (105) reconnaît une erreur.

9. Programme informatique, comprenant des codes de programme destinés à mettre en oeuvre le procédé selon la revendication 8 lorsque le programme informatique est exécuté sur un ordinateur.
